# EUROPEAN PATENT APPLICATION

(11) **EP 4 847 114 A1**
(43) Date of publication of application: **02.12.2026**
(21) Application number: 25782345.0
(22) Date of filing: 05.02.2025
(51) Int. Cl.: B01D 53/14, B01D 53/62, B01D 53/78, C01B 32/50

(54) **CONTROL DEVICE, CO2 RECOVERY DEVICE, CONTROL METHOD, AND PROGRAM**

(30) Priority: 04.04.2024 JP 2024061036
(71) Applicant: Mitsubishi Heavy Industries, Ltd., Chiyoda-ku Tokyo 100-8332 (JP)
(72) Inventor: ONO, Hitoi, Tokyo 100-8332 (JP); MORITA, Satoshi, Tokyo 100-8332 (JP); NAKAGAWA, Yosuke, Tokyo 100-8332 (JP); OHTSUKA, Toshiyuki, Kyoto-shi Kyoto 606-8501 (JP)
(74) Representative: Studio Torta S.p.A.
(86) International application number: PCT/JP2025/003742
(87) International publication number: WO 2025/211007

(57) **Abstract**

Provided is a control method for a CO₂ recovery device that achieves an economically efficient operation while controlling a controlled variable to a target value. A control device includes: a data acquisition unit that is configured to acquire operation data of a CO₂ recovery device; a target value setting unit that is configured to set a target value of a parameter of a controlled object based on the operation data; a prediction model that is configured to simulate an operation and a state of the CO₂ recovery device; an optimization calculation unit that is configured to calculate the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device, while predicting the predicted value of the parameter when a predetermined manipulated variable is applied to the CO2 recovery device based on a prediction model that is configured to predict a state of the CO2 recovery device; and a control unit that is configured to control the CO₂ recovery device based on the calculated manipulated variable.

## Description

### TECHNICAL FIELD

The present disclosure relates to a control device, a CO₂ recovery device, a control method, and a program.

Priority is claimed on Japanese Patent Application No. 2024-061036, filed April 4, 2024, the content of which is incorporated herein by reference.

### BACKGROUND ART

Patent Document 1 discloses a method for operating a CO₂ recovery device while controlling a CO₂ concentration and a CO₂ recovery rate toward target values. Specifically, the method is a control method in which, by changing a circulation flow rate of an absorbent solution to be supplied to an absorption tower and changing an amount of saturated steam to be supplied to a regeneration heater of a regeneration tower, control for maintaining a difference between an actually measured value and a target value of the CO₂ recovery rate within a predetermined range and control for maintaining a difference between an actually measured value and a target value of the CO₂ concentration within a predetermined range are performed in parallel. Hereinafter, a CO₂ concentration and a CO₂ recovery rate of a controlled object (evaluation target) will be referred to as controlled variables, and a circulation flow rate of a lean absorbent solution to be supplied to an absorption tower and an amount of saturated steam to be supplied to a regeneration heater for controlling the controlled variables toward target values will be referred to as manipulated variables. Patent Document 1 discloses a method for preventing interference between a manipulated variable for controlling a CO₂ concentration and a manipulated variable for controlling a CO₂ recovery rate. According to the control method of Patent Document 1, the CO₂ concentration and the CO₂ recovery rate can be controlled to target values, but economic efficiency of operation is not taken into consideration.

### Citation List

### Patent Document

Patent Document 1: Japanese Unexamined Patent Application, First Publication No. 2016-16392

### SUMMARY OF INVENTION

### Technical Problem

Provided is a control method for a CO₂ recovery device that achieves an economically efficient operation while controlling a controlled variable to a target value.

The present disclosure provides a control device, a CO₂ recovery device, a control method, and a program capable of solving the above-described problems. Solution to Problem

According to an aspect of the present disclosure, there is provided a control device including: a data acquisition unit that is configured to acquire operation data of a CO₂ recovery device; a target value setting unit that is configured to set a target value of a parameter of a controlled object based on the operation data; an optimization calculation unit that is configured to calculate the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device, while predicting the predicted value of the parameter when a predetermined manipulated variable is applied to the CO2 recovery device based on a prediction model that is configured to predict a state of the CO2 recovery device; and a control unit that is configured to control the CO₂ recovery device based on the calculated manipulated variable.

According to another aspect of the present disclosure, there is provided a CO₂ recovery device including: an absorption tower; a regeneration tower; a regeneration heater provided in the regeneration tower; a pipe for sending a lean absorbent solution from the regeneration tower to the absorption tower; a valve provided in the pipe; and the control device.

According to another aspect of the present disclosure, there is provided a control method including: acquiring operation data of a CO₂ recovery device; setting a target value of a parameter of a controlled object based on the operation data; calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and controlling the CO₂ recovery device based on the calculated manipulated variable.

According to another aspect of the present disclosure, there is provided a program causing a computer to execute a process including: acquiring operation data of a CO₂ recovery device; setting a target value of a parameter of a controlled object based on the operation data; calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and controlling the CO₂ recovery device based on the calculated manipulated variable. Advantageous Effects of Invention

According to the control device, the CO₂ recovery device, the control method, and the program, it is possible to implement control of the CO₂ recovery device in consideration of economic efficiency while controlling a controlled variable to a target value.

### BRIEF DESCRIPTION OF DRAWINGS

[FIG. 1] A schematic diagram showing an example of a CO₂ recovery device according to an embodiment.
[FIG. 2] A block diagram showing an example of a control device according to the embodiment.
[FIG. 3] A diagram showing an outline of control according to the embodiment.
[FIG. 4] A first diagram for describing several control examples according to the embodiment.
[FIG. 5] A second diagram for describing several control examples according to the embodiment.
[FIG. 6] A diagram for describing optimum operating points according to the embodiment.
[FIG. 7] A diagram showing an example of a test case of an operation of the CO₂ recovery device.
[FIG. 8A] A first diagram showing an example of control results in a case where the optimum operating points according to the embodiment are not considered.
[FIG. 8B] A second diagram showing an example of control results in the case where the optimum operating points according to the embodiment are not considered.
[FIG. 9] A diagram showing an example of trajectories of operating points in a case where the optimum operating points are considered in the embodiment.
[FIG. 10A] A first diagram showing an example of control results in a case where the optimum operating points according to the embodiment are considered.
[FIG. 10B] A second diagram showing an example of control results in the case where the optimum operating points according to the embodiment are considered.
[FIG. 11] A flowchart showing an example of control of the CO₂ recovery device according to the embodiment.
[FIG. 12] A diagram showing an example of a hardware configuration of the control device according to the embodiment.

### DESCRIPTION OF EMBODIMENTS

Hereinafter, a control method for a CO₂ recovery device according to the present disclosure will be described with reference to the drawings.

### <Embodiment>

### (Configuration)

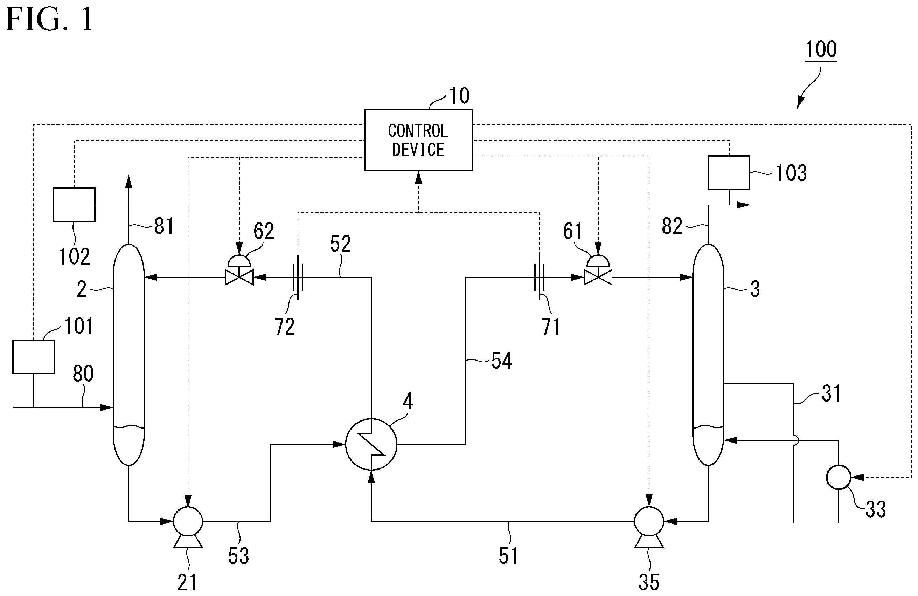

FIG. 1 shows an example of a schematic configuration of a CO₂ recovery device 100 according to the embodiment. As shown in FIG. 1, the CO₂ recovery device 100 includes a control device 10, an absorption tower 2, a regeneration tower 3, a heat exchanger 4, and the like. Exhaust gas discharged from an industrial combustion facility such as a boiler or a gas turbine is cooled and then sent to the absorption tower 2 through a pipe 80. An exhaust gas measuring instrument 101 is provided in the pipe 80. The exhaust gas measuring instrument 101 measures a flow rate of the exhaust gas sent to the absorption tower 2 and a CO₂ concentration in the exhaust gas, and transmits the measured values to the control device 10. The exhaust gas sent to the absorption tower 2 comes into contact with an absorbent solution in the absorption tower 2, and CO₂ in the exhaust gas is absorbed into the absorbent solution through a chemical reaction. The absorbent solution that has absorbed CO₂ is referred to as a rich absorbent solution. The exhaust gas from which CO₂ has been removed in the absorption tower 2 is released to the outside of the system through a pipe 81. A CO₂ concentration meter 102 is provided in the pipe 81. The CO₂ concentration meter 102 detects a CO₂ concentration in the exhaust gas discharged from the absorption tower 2, and transmits the detected CO₂ concentration to the control device 10. The rich absorbent solution is pressurized by a pump 21 and sent to the heat exchanger 4 through a pipe 53. The rich absorbent solution is heated, in the heat exchanger 4, by a lean absorbent solution that has been regenerated in the regeneration tower 3 and has a higher temperature than the rich absorbent solution, and is supplied to the regeneration tower 3 through a pipe 54.

The rich absorbent solution supplied to the regeneration tower 3 is supplied from an upper portion of the regeneration tower 3 to an inside of the regeneration tower 3. The rich absorbent solution releases CO₂ through an endothermic reaction inside the regeneration tower 3. The rich absorbent solution supplied to the regeneration tower 3 becomes a semi-lean solution in which CO₂ is removed while flowing down to a tower bottom portion. A circulation line 31 for circulating the absorbent solution that has flowed down to the tower bottom portion is provided at a bottom portion of the regeneration tower 3. A regeneration heater 33 that heats the absorbent solution is provided in the circulation line 31. The regeneration heater 33 is, for example, an electric heater or a heat exchanger. In the case of the electric heater, the absorbent solution flowing through the circulation line 31 is heated by heat of the electric heater and is returned to the regeneration tower 3. In the case of the heat exchanger, for example, saturated steam or the like is supplied to the regeneration heater 33 through a pipe (not shown), the saturated steam supplied through the pipe and the absorbent solution flowing through the circulation line 31 exchange heat, and the absorbent solution flowing through the circulation line 31 is heated and is returned to the regeneration tower 3. The semi-lean solution circulates through the circulation line 31 and is heated by the regeneration heater 33 to become a lean solution. As described above, the rich absorbent solution supplied to the regeneration tower 3 becomes a lean absorbent solution, which is an absorbent solution from which almost all the CO₂ has been removed, by the time the rich absorbent solution reaches a lower portion of the regeneration tower 3. The lean absorbent solution is pressurized by a pump 35 and is sent to the heat exchanger 4 through a pipe 51. The lean absorbent solution sent to the heat exchanger 4 through the pipe 51 is cooled by the rich absorbent solution in the heat exchanger 4, and is supplied to the absorption tower 2 through a pipe 52. In this manner, the absorbent solution circulates between the absorption tower 2 and the regeneration tower 3. From the upper portion of the regeneration tower 3, CO₂ gas released from the rich absorbent solution in the regeneration tower 3 is discharged through a pipe 82. A CO₂ gas measuring instrument 103 is provided in the pipe 82. The CO₂ gas measuring instrument 103 detects a gas flow rate and a concentration of the discharged CO₂ gas, and transmits the gas flow rate and the concentration to the control device 10.

A rich absorbent solution control valve 61 is provided in the pipe 54. The control device 10 controls a flow rate of the rich absorbent solution sent to the regeneration tower 3 by controlling an opening degree of the rich absorbent solution control valve 61. A flow rate of the rich absorbent solution flowing through the pipe 54 is measured by a flow meter 71. The flow rate measured by the flow meter 71 is transmitted to the control device 10. A lean absorbent solution control valve 62 is provided in the pipe 52. The control device 10 controls a flow rate of the lean absorbent solution sent to the absorption tower 2 by controlling an opening degree of the lean absorbent solution control valve 62. A flow rate of the lean absorbent solution flowing through the pipe 52 is measured by a flow meter 72. The flow rate measured by the flow meter 72 is transmitted to the control device 10. The control device 10 controls heat input to the regeneration heater 33. For example, in a case where the regeneration heater 33 is an electric heater, the control device 10 controls an output of the electric heater. In a case where the regeneration heater 33 is a heat exchanger, the control device 10 controls a flow rate of the saturated steam supplied to the regeneration heater 33 by controlling an opening degree of a saturated steam control valve (not shown) provided in a pipe that supplies the saturated steam. A pump 21 that sends the rich absorbent solution is provided in the pipe 53. The control device 10 controls the pump 21 to pump the rich absorbent solution accumulated in a lower portion of the absorption tower 2 toward the heat exchanger 4 and the regeneration tower 3. A pump 35 that sends the lean absorbent solution is provided in the pipe 51. The control device 10 controls the pump 35 to pump the lean absorbent solution accumulated in the lower portion of the regeneration tower 3 toward the heat exchanger 4 and the absorption tower 2. The control device 10 acquires the flow rate of the exhaust gas, an exhaust gas temperature, and the CO₂ concentration in the exhaust gas measured by the exhaust gas measuring instrument 101, the CO₂ concentration measured by the CO₂ concentration meter 102, and the gas flow rate and the concentration of the CO₂ gas measured by the CO₂ gas measuring instrument 103, and controls, based on these pieces of information, heat input to the regeneration heater 33 (for example, the output of the electric heater or the flow rate of the saturated steam) such that the CO₂ concentration and the CO₂ recovery rate become predetermined target values.

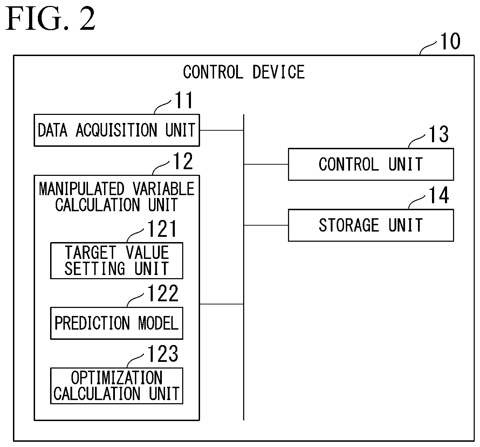

FIG. 2 is a block diagram showing an example of a function of the control device according to the embodiment. The control device 10 controls the CO₂ recovery device 100 by nonlinear model predictive control (NMPC). As shown in FIG. 2, the control device 10 includes a data acquisition unit 11, a manipulated variable calculation unit 12, a control unit 13, and a storage unit 14.

The data acquisition unit 11 acquires the flow rate and the temperature of the exhaust gas and the CO₂ concentration in the exhaust gas measured by the exhaust gas measuring instrument 101, the CO₂ concentration measured by the CO₂ concentration meter 102, the gas flow rate and the concentration of the CO₂ gas measured by the CO₂ gas measuring instrument 103, the flow rate of the rich absorbent solution measured by the flow meter 71, the flow rate of the lean absorbent solution measured by the flow meter 72, and the like. The data acquisition unit 11 records the acquired measured values in the storage unit 14 in association with the time.

The manipulated variable calculation unit 12 calculates a manipulated variable such that a difference between the measured value of the CO₂ concentration and/or the CO₂ recovery rate and a predetermined target value (reference value) falls within a predetermined range. Alternatively, the manipulated variable calculation unit 12 may calculate a manipulated variable that not only brings the CO₂ concentration and the CO₂ recovery rate close to the target values but also optimizes heater heat input Qᵢₙ and a lean absorbent solution flow rate WL. The heater heat input Qᵢₙ represents an amount of heat supplied to the regeneration heater 33, and can be controlled by adjusting the output of the electric heater or the flow rate of the saturated steam. The optimization of the lean absorbent solution flow rate WL can be implemented, for example, by adjusting the opening degree of the lean absorbent solution control valve 62. The manipulated variable calculation unit 12 includes a target value setting unit 121, a prediction model 122, and an optimization calculation unit 123.

The target value setting unit 121 sets target values of controlled variables (the CO₂ concentration and the CO₂ recovery rate) and target values of manipulated variables (the flow rate WL of the lean absorbent solution supplied to the absorption tower and the heater heat input Qᵢₙ). For example, the target value setting unit 121 sets a target value of the CO₂ concentration and a target value of the CO₂ recovery rate corresponding to the flow rate and the temperature of the exhaust gas supplied to the CO₂ recovery device 100, a target value of the heater heat input Qᵢₙ and a target value of the lean absorbent solution flow rate WL at an optimum operating point corresponding to the flow rate and the temperature of the exhaust gas supplied to the CO₂ recovery device 100, and the like. These target values set by the target value setting unit 121 may be values calculated in advance using a simulator that simulates operation of the CO₂ recovery device 100 (which may be the prediction model 122 described later) or the like. Alternatively, the target value setting unit 121 may have a simulator, and parameters such as the flow rate and the temperature of the exhaust gas acquired by the data acquisition unit 11 during the operation of the CO₂ recovery device 100 may be input to the simulator to calculate each of the target values.

The prediction model 122 is a simulator that simulates operation when a manipulation is performed on the CO₂ recovery device 100, and predicts a state of a plant caused by the manipulation. The prediction model 122 is composed of a large number of physical models that describe phenomena occurring in the CO₂ recovery device 100. Most of the physical models are described by nonlinear mathematical formulas. An example of the physical models is shown below. In this physical model, characteristics of the absorbent solution, a mass transfer coefficient, concentrations of gas and liquid, and a temperature distribution in a flow direction within a container are taken into consideration. The gas includes CO₂, N₂, and O₂, and the liquid includes H₂O, N₂, an amine absorbent solution, and the like. When t represents time, i represents an identification number of gas and liquid components, j represents the number of divisions in a flow direction of the gas and liquid components (regions formed by dividing the absorption tower 2 or the like by cross sections orthogonal to the flow direction of the gas or liquid are referred to as "elements," and the states of the gas and liquid are modeled for each element based on chemical changes and the like occurring in the element, in which the number of divisions refers to the number of elements in this case), Fⱼ^{L}(t) represents a liquid flow rate [kg/s], x_{i,j}(t) represents a liquid mass composition [weight fraction], Mᵢ represents a molecular weight [kg/kg-mol], d_{z} represents a length [m] in the flow direction per element, M_{cpj} represents a heat capacity [J/K], Cⱼ^{PL}(t) represents a liquid specific speed [J/kg K], γᵢ(t) represents a heat of reaction [J/kg], and Qₑₓ(t) represents an amount of heat transfer [J/s] between the gas and the liquid, a liquid hold-up U_{i,j}(t) [kg] and a liquid temperature Tⱼ^{L}(t) [K] are each calculated by the following Equation (1).$\left.\begin{matrix}\frac{d}{dt} {U}_{i , j} \left(t\right) = {F}_{j - 1}^{L} \left(t\right) {x}_{i , j - 1} \left(t\right) - {F}_{j}^{L} \left(t\right) {x}_{i , j} \left(t\right) + {m}_{i , j} \left(t\right) {M}_{i} {d}_{z} \\ {M}_{{cp}_{j}} \frac{d}{dt} {T}_{j}^{L} \left(t\right) \\ = {F}_{j - 1}^{L} \left(t\right) {C}_{j - 1}^{PL} \left(t\right) {T}_{j - 1}^{L} \left(t\right) - {F}_{j}^{L} \left(t\right) {C}_{j}^{PL} \left(t\right) {T}_{j}^{L} \left(t\right) \\ + {\sum }_{i} {m}_{i , j} \left(t\right) {M}_{i} {d}_{z} {γ}_{i} \left(t\right) + {Q}_{ex} \left(t\right)\end{matrix}\right\}$ (1)

When k_{Gi,j}(t) represents a mass transfer coefficient [kg-mol/(s m² Pa)] which is a function of temperature, liquid composition, and the like, aⱼ represents a gas/liquid contact area [m²], p_{i,j}(t) represents a partial pressure [Pa] of the gas, and p_{i,j}^{*}(t) represents an equilibrium partial pressure [Pa] which is a function of temperature, liquid composition, and the like, mass transfer amounts m_{i,j}(t) [kg-mol/s] of CO₂ and H₂O are calculated by the following Equation (2). ${m}_{i , j} \left(t\right) = {k}_{Gi , j} \left(t\right) {a}_{j} \left\{{p}_{i , j}\left(t\right)-{p}_{i , j}*\left(t\right)\right\}$ (2)

When Fⱼ^{G} represents a gas flow rate [kg-mol/s] and y_{i,j}(t) represents a gas composition [mole fraction], a mass balance of the gas is calculated by the following Equation (3).

${F}_{j}^{G} \left(t\right) {y}_{i , j} \left(t\right) = {F}_{j + 1}^{G} \left(t\right) {y}_{i , j + 1} \left(t\right) + {m}_{i , j} \left(t\right) {d}_{2}$ (3)

When Cⱼ^{PG}(t) represents a gas specific speed [J/kg-mol K], a gas temperature Tⱼ^{G}(t) is calculated by the following Equation (4) based on a gas-side heat balance.

${F}_{j}^{G} \left(t\right) {C}_{j}^{PG} \left(t\right) {T}_{j}^{G} \left(t\right) = {F}_{j + 1}^{G} \left(t\right) {C}_{j + 1}^{PG} \left(t\right) {T}_{j + 1}^{G} \left(t\right) - {Q}_{ex} \left(t\right)$ (4)

In order to be used for real-time online control of the CO₂ recovery device 100, the prediction model 122 is required to be able to predict the state of the CO₂ recovery device 100 at high speed. Therefore, in the prediction model 122, more than 10,000 parameters used in the physical models that constitute the prediction model 122 are reduced in dimensionality to about several hundred parameters so that high-speed calculation can be performed while maintaining the prediction accuracy. The dimensionality reduction is performed by approximating coefficients of absorption reactions and equilibrium reactions with polynomials or by adjusting the number of divisions and the like. It has been confirmed that simulation results of the CO₂ gas flow rate or the like by the prediction model 122 based on the dimensionality-reduced physical models accurately match measured values in an actual plant. For example, when the heater heat input Qᵢₙ and the lean absorbent solution flow rate WL are given as inputs, the prediction model 122 predicts the CO₂ concentration, the CO₂ recovery rate, and the like.

The optimization calculation unit 123 uses the prediction model 122 to predict a controlled variable such as the CO₂ concentration in a case where the CO₂ recovery device 100 is controlled with a certain manipulated variable, and calculates, by optimization calculation, a manipulated variable that can achieve a target value of the controlled variable, or a manipulated variable that can achieve an optimum operating point by optimizing the heater heat input Qᵢₙ and the flow rate WL of the lean absorbent solution while achieving the target value of the controlled variable. For example, the optimization calculation unit 123 gives, to the prediction model 122, a predicted value of the manipulated variable at one-second intervals up to several minutes ahead, causes the prediction model 122 to predict the state of the CO₂ recovery device 100 at one-second intervals up to several minutes ahead, and calculates, as an optimum solution, a manipulated variable in a case where a sum of differences between predicted values of controlled variables, such as the CO₂ recovery rate, at one-second intervals over the predicted several minutes and respective target values is minimized. For example, a C/GMRES method is used for searching for a solution in the optimization calculation. When the C/GMRES method is used, the manipulated variable is calculated without iterative calculation by tracking an amount of change in the optimum solution, so that the solution can be calculated efficiently and at high speed. By the dimensionality reduction of the number of parameters of the prediction model 122 and the calculation by the C/GMRES method, the manipulated variable serving as the solution can be calculated at a high speed. As a result, real-time control and online control of the CO₂ recovery device 100 can be implemented. For example, even in a situation where an operating load of the CO₂ recovery device 100 changes at high speed, the CO₂ recovery device 100 can be controlled in real time according to a speed of the load change.

The control unit 13 controls the CO₂ recovery device 100 by using the manipulated variable calculated by the manipulated variable calculation unit 12. For example, the control unit 13 controls the opening degree of the lean absorbent solution control valve 62 or the like such that the heater heat input Qᵢₙ and the lean absorbent solution flow rate WL can be optimized while achieving the target values of the CO₂ concentration and the CO₂ recovery rate.

The storage unit 14 stores various types of information necessary for controlling the CO₂ recovery device 100, such as data acquired by the data acquisition unit 11 and target values set by the target value setting unit 121.

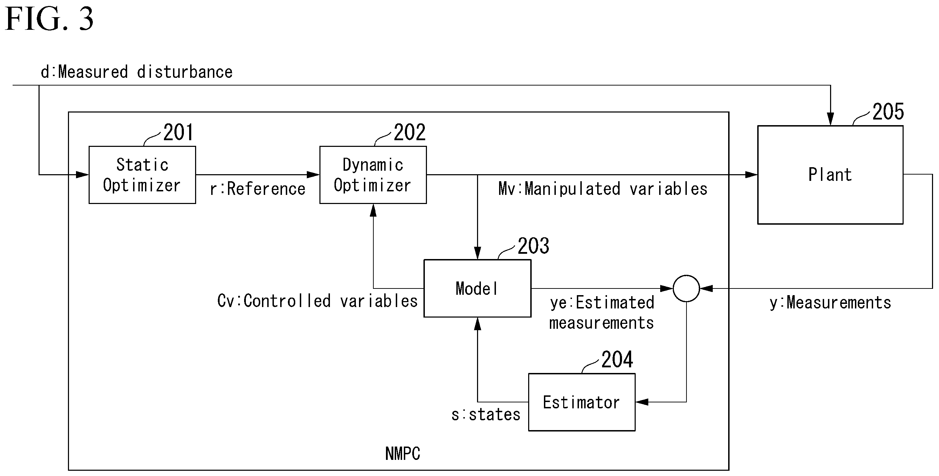

FIG. 3 shows an outline of the control performed by the control device 10. In FIG. 3, d (Measured disturbance) is, for example, a flow rate or temperature of exhaust gas supplied to the CO₂ recovery device 100. A disturbance d is applied to a Static Optimizer 201 and a Plant 205. Upon receiving the disturbance d, the Static Optimizer 201 generates a Reference. The Reference is, for example, a target value of a controlled variable and a target value of a manipulated variable. For example, the Static Optimizer 201 generates a target value of the CO₂ concentration corresponding to the disturbance d, a target value of the CO₂ recovery amount corresponding to the disturbance d, a target value of the heater heat input Qᵢₙ corresponding to the disturbance d, and a target value of the lean absorbent solution flow rate WL corresponding to the disturbance d. The Static Optimizer 201 provides the generated Reference to the Dynamic Optimizer 202. The Dynamic Optimizer 202 searches, by optimization calculation, for manipulated variables Mv (Manipulated variables) that can achieve the received Reference. Specifically, the Dynamic Optimizer 202 provides certain manipulated variables Mv to a Model 203, compares the controlled variable Cv (Controlled Variables) predicted by the Model 203 with the target value, and evaluates the manipulated variables Mv provided to the Model 203. The Dynamic Optimizer 202 repeats this processing to search for appropriate manipulated variables Mv. The manipulated variable Mv are the heater heat input Qᵢₙ (for example, the output of the electric heater or the opening degree of the valve that adjusts the flow rate of the saturated steam) and the lean absorbent solution flow rate WL (for example, the opening degree of the lean absorbent solution control valve 62). When appropriate manipulated variables Mv are found, the Plant 205 is controlled with the manipulated variables Mv. As a result of the control of the Plant 205 by the manipulated variables Mv, measured values y such as the CO₂ concentration and the CO₂ recovery rate are measured. An Estimator 204 calculates a difference between a predicted values ye (Estimated measurements) of the controlled variables predicted by the Model 203 in a case where the same manipulated variables Mv as those provided to the Plant 205 are provided to the Model 203 and the measured values y, calculates a state s of the Model 203 that compensates for the difference, and corrects the Model 203 by the amount corresponding to the state s such that an actual state of the Plant 205 can be correctly simulated. The Static Optimizer 201 corresponds to the target value setting unit 121 in FIG. 2. The Model 203 corresponds to the prediction model 122 in FIG. 2. The Dynamic Optimizer 202 corresponds to the optimization calculation unit 123 in FIG. 2.

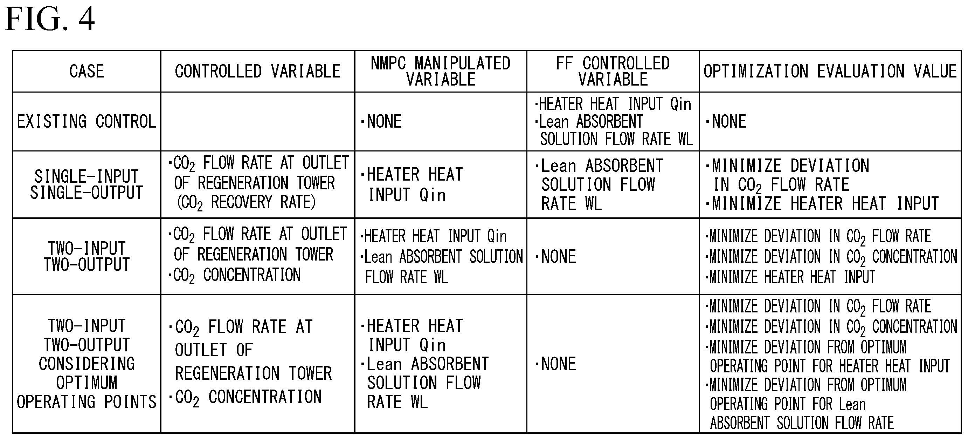

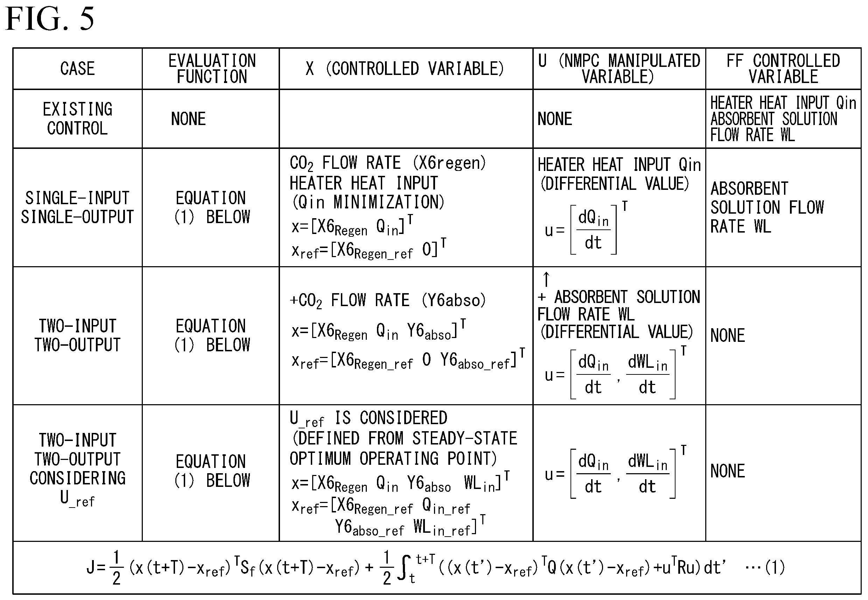

Next, several control examples will be described with reference to FIGS. 4 and 5.

### (1) Existing Control

For comparison, an example of existing control will be described. In the existing control, for example, command values of the heater heat input Qᵢₙ and the lean absorbent solution flow rate W_{L} according to an exhaust gas flow rate or the like are calculated, and feedforward control is performed in which the command values are provided to the plant. In the existing control, control by the NMCP is not performed. Next, a control example using NMCP according to the present embodiment will be described.

### (2) Single-Input Single-Output

In single-input single-output, the heater heat input Qᵢₙ is adopted as the manipulated variable, and a CO₂ flow rate at an outlet of the regeneration tower 3 is adopted as the controlled variable. The heater heat input Qᵢₙ is provided to the prediction model 122, and the heater heat input Qᵢₙ that can control the CO₂ flow rate to the target value is obtained by optimization calculation. For the lean absorbent solution flow rate W_{L}, a command value is calculated, and feedforward control is performed in which the command value is output to the CO₂ recovery device 100. A relationship between the CO₂ flow rate at the outlet of the regeneration tower and the CO₂ recovery rate can be represented by the following Equation (A), and bringing the CO₂ flow rate at the outlet of the regeneration tower close to the target value has the same meaning as bringing the CO₂ recovery rate close to the target value of the CO₂ recovery rate by using the CO₂ recovery rate as the controlled variable. 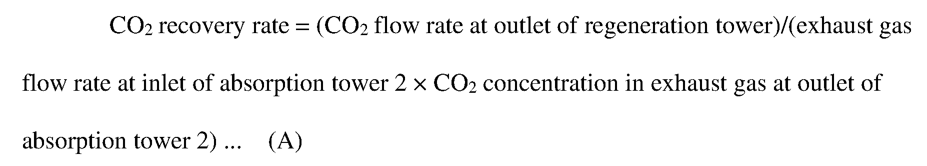 CO2 recovery rate = (CO2 flow rate at outlet of regeneration tower)/(exhaust gas flow rate at inlet of absorption tower 2 × CO2 concentration in exhaust gas at outlet of absorption tower 2) (A)

As the CO₂ flow rate at the outlet of the regeneration tower in Equation (A), a value measured by the CO₂ gas measuring instrument 103 can be used; as the exhaust gas flow rate at the inlet of the absorption tower 2, a value measured by the exhaust gas measuring instrument 101 can be used; and as the CO₂ concentration in the exhaust gas at the outlet of the absorption tower 2, a value measured by the CO₂ concentration meter 102 can be used.

An example of an evaluation function in the optimization calculation is shown in Equation (1) of FIG. 5. In Equation (1) of FIG. 5, x represents the controlled variable, and as described in the "X (controlled variable)" column of the table of FIG. 5, x in the single-input single-output is x = [X6_{regen} Qᵢₙ]^{T}. In Equation (1) of FIG. 5, x_{ref} represents the target value (reference value) of the controlled variable, and x_{ref} = [X6_{regen_ref} 0 (zero)]^{T}. Similarly, u in Equation (1) of FIG. 5 represents the manipulated variable, and as described in the "U (NMPC manipulated variable)" column of the table of FIG. 5, u in the single-input single-output is u = [dQᵢₙ/dt]^{T}. t is time, and T in t + T is a value calculated by T = T_{f}(1 - e^{-αt}), where T_{f} is a prediction horizon and α is an acceleration gain. The superscript T is a transposed vector, u is the manipulated variable, Qᵢₙ is the heater heat input, WLᵢₙ is the lean absorbent solution flow rate supplied from the regeneration tower 3 to the absorption tower 2, X6_{regen} is the CO₂ flow rate at the outlet of the regeneration tower 3 (measured value of the CO₂ gas measuring instrument 103), X6_{regen_ref} is a value calculated by the exhaust gas flow rate to the absorption tower 2 × the CO₂ concentration at the inlet of the absorption tower 2 × the target value of the CO₂ recovery rate, Sf is a terminal weighting coefficient, Q is a state weighting coefficient, and R is a weighting coefficient for control. The optimization calculation unit 123 calculates u that minimizes the value of Equation (1) of FIG. 5. In the single-input single-output, as is clear from the definition of x and Equation (1) of FIG. 5 which is the evaluation function, a deviation between a predicted value of the CO₂ flow rate obtained by the prediction model 122 and the target value of the CO₂ flow rate is minimized (a deviation between the CO₂ recovery rate and the target value of the CO₂ recovery rate is minimized), and the heater heat input Qᵢₙ is calculated as a manipulated variable while the heater heat input Qᵢₙ itself is minimized.

Here, the deviation between the predicted value of the CO₂ flow rate and the target value of the CO₂ flow rate is minimized, but the evaluation function may be configured to minimize a deviation between a predicted value of the CO₂ concentration and the target value of the CO₂ concentration.

### (3) 2-Input 2-Output

In 2-input 2-control, the heater heat input Qᵢₙ and the lean absorbent solution flow rate WL are adopted as the manipulated variables, and the CO₂ flow rate at the outlet of the regeneration tower 3 and the CO₂ concentration discharged from the absorption tower 2 are adopted as the controlled variables. The heater heat input Qᵢₙ and the lean absorbent solution flow rate WL are provided to the prediction model 122, and the heater heat input Qᵢₙ and the lean absorbent solution flow rate WL that enable the CO₂ flow rate and the CO₂ concentration to be controlled to the respective target values are obtained by optimization calculation. As the CO₂ concentration, a value measured by the CO₂ concentration meter 102 can be used. The evaluation function is Equation (1) of FIG. 5. Unlike the single-input single-output, the controlled variable x is x = [X6_{regen} Qᵢₙ Y6_{abso}]^{T} as described in the "X (controlled variable)" column of the table of FIG. 5. xr_{ef} is x_{ref} = [X6_{regen_ref} 0 Y6_{abso_ref}]^{T} as shown in the table of FIG. 5. u is u = [dQᵢₙ/dt, dWLᵢₙ/dt]^{T} as shown in the "U (NMPC manipulated variable)" column of the table of FIG. 5. In the 2-input 2-output, the deviation between the predicted value of the CO₂ flow rate and the target value of the CO₂ flow rate is minimized, the deviation between the predicted value of the CO₂ concentration and the target value of the CO₂ concentration is minimized, and the heater heat input Qᵢₙ is calculated as a manipulated variable while the heater heat input Qᵢₙ itself is minimized.

### (4) 2-Input 2-Output Considering Optimum Operating Points

In the 2-input 2-output considering optimum operating points, the heater heat input Qᵢₙ and the lean absorbent solution flow rate WL are adopted as the manipulated variables, and the CO₂ flow rate at the outlet of the regeneration tower 3 and the CO₂ concentration discharged from the absorption tower 2 are adopted as the controlled variables. Then, in addition to controlling the CO₂ flow rate and the CO₂ concentration to the respective target values, the heater heat input Qᵢₙ and the lean absorbent solution flow rate WL are obtained by optimization calculation such that differences between a predicted value of the heater heat input Qᵢₙ and a predicted value of the lean absorbent solution flow rate WL and the respective optimum operating points are minimized. The evaluation function is Equation (1) of FIG. 5. Unlike the 2-input 2-output, the controlled variable x is x = [X6_{regen} Qᵢₙ Y6_{abso} WLᵢₙ]^{T}. x_{ref} is x_{ref} = [X6_{regen_ref} Q_{in_ref} Y6_{abso_ref} WL_{in_ref}]^{T}. u is the same as in the 2-input 2-output.

### (Regarding Optimum Operating Point)

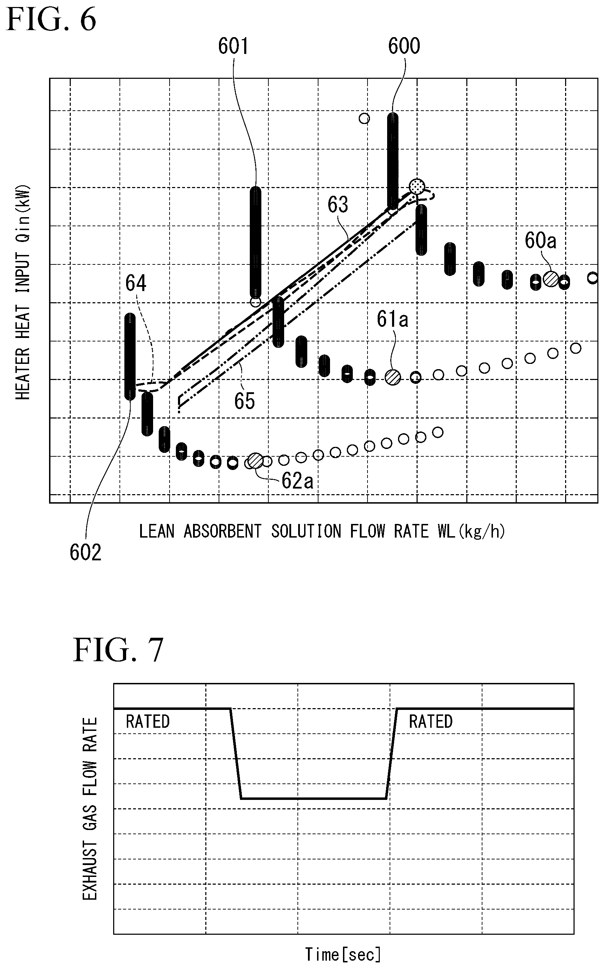

Next, an optimum operating point will be described. FIG. 6 shows an example of optimum operating points and a trajectory of operating points in a case where the CO₂ recovery device is operated without considering the optimum operating points. A vertical axis of a graph of FIG. 6 represents Qᵢₙ (kW), and a horizontal axis represents WL (kg/h). A graph 600 is a graph showing a relationship between the heater heat input Qᵢₙ and the lean absorbent solution flow rate WL at various operating points of the CO₂ recovery device 100 in a case where the exhaust gas flow rate is a rated flow rate. A graph 601 is a graph showing a relationship between the heater heat input Qᵢₙ and the lean absorbent solution flow rate WL at various operating points of the CO₂ recovery device 100 in a case where the exhaust gas flow rate is 80%. A graph 602 is a graph showing a relationship between the heater heat input Qᵢₙ and the lean absorbent solution flow rate WL at various operating points of the CO₂ recovery device 100 in a case where the exhaust gas flow rate is 60%. The graphs 600 to 602 are graphs obtained by providing rated, 80%, and 60% values of the exhaust gas flow rate as input parameters to a simulator of the CO₂ recovery device 100, which may be, for example, the prediction model 122, simulating operating states that achieve the target values of the CO₂ concentration or the CO₂ recovery rate at the respective exhaust gas flow rates, and plotting relationships between the lean absorbent solution flow rate WL and the heater heat input Qᵢₙ when the lean absorbent solution flow rate WL is varied while maintaining the operation states. The optimum operating point is an operating point at which the heater heat input Qᵢₙ is minimized while achieving the target values of the CO₂ concentration and the CO₂ recovery rate. For the graph 600 of the rated value, values of the heater heat input and the lean absorbent solution flow rate corresponding to a point 60a are the optimum operating points. Similarly, for the graph 601 of the rated value, values of the heater heat input and the lean absorbent solution flow rate corresponding to a point 61a are the optimum operating points, and for the graph 602 of the rated value, values of the heater heat input and the lean absorbent solution flow rate corresponding to a point 62a are the optimum operating points.

A trajectory of operating points in a case where an operation simulation is performed in which the target value of the CO₂ recovery rate is set to 75%, the exhaust gas flow rate supplied to the CO₂ recovery device 100 is decreased from a rated flow rate to a 60% flow rate at a change rate of 10%/min as shown in FIG. 7, the state is maintained for a while, and thereafter the exhaust gas flow rate is increased to the rated flow rate at the same change rate is shown by graphs 63 to 65 in FIG. 6. Numerical values (10%/min and 60%, respectively) relating to the change rate of the exhaust gas flow rate and the ratio by which the flow rate is decreased are examples and are not limited thereto. The graph 63 shows a trajectory of operating points in a case where (1) existing control described above is performed while changing the exhaust gas flow rate under the above-described conditions. The graph 65 shows a trajectory of operating points in a case where the control of (2) single-input single-output is performed while similarly changing the exhaust gas flow rate. The graph 64 shows a trajectory of operating points in a case where the control of (3) 2-input 2-output is performed while similarly changing the exhaust gas flow rate. In this example, the simulation is performed using, as a starting condition, a certain operating point based on operation of an actual machine. As shown in FIG. 6, in any case, a state in which the heater heat input Qᵢₙ is higher than the optimum operating point is maintained.

### (Control Result in Case Where Optimum Operating Point Is Not Considered)

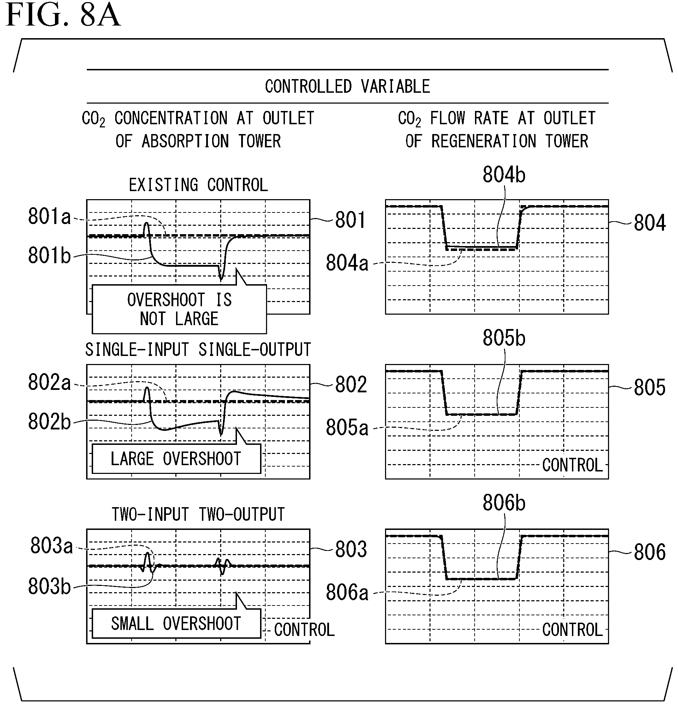

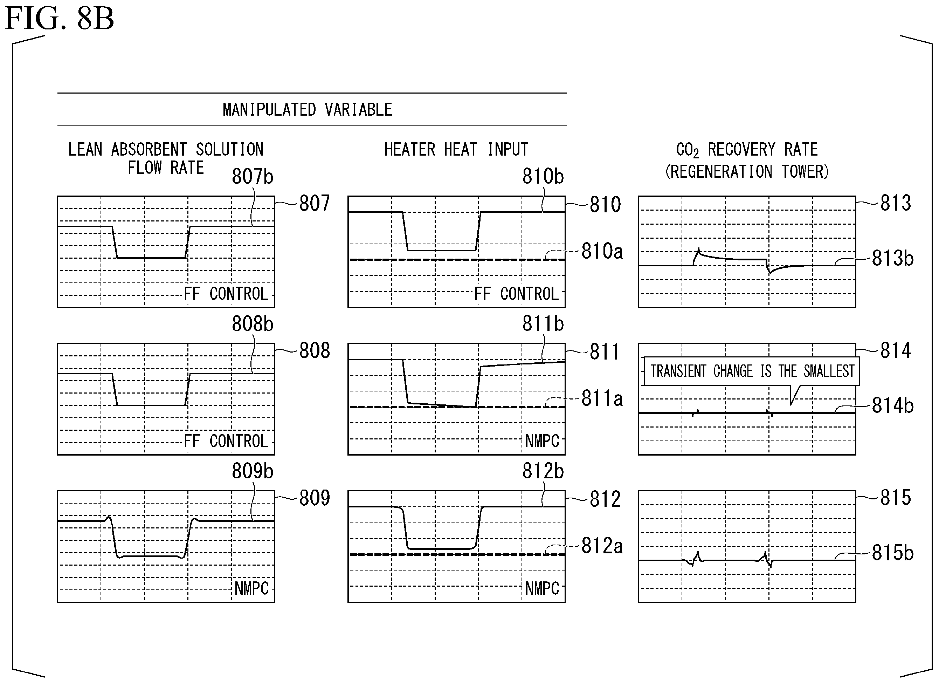

FIGS. 8A and 8B show an example of a simulation result in a case where the optimum operating point is not considered. FIG. 8A shows results of controlled variables. Vertical axes of graphs 801 to 803 represent the CO₂ concentration, and horizontal axes represent time. The graph 801 shows a transition of the CO₂ concentration in (1) existing control, the graph 802 shows a transition of the CO₂ concentration in (2) single-input single-output, and the graph 803 shows a transition of the CO₂ concentration in (3) 2-input 2-output. Graphs 801a, 802a, and 803a show target values, and graphs 801b, 802b, and 803b show control results. In the single-input single-output, an overshoot of the CO₂ concentration after time t1 becomes large. In the 2-input 2-output, the overshoot is suppressed.

Vertical axes of graphs 804 to 806 in FIG. 8A represent the CO₂ flow rate, and horizontal axes represent time. The graph 804 shows a transition of the CO₂ flow rate in (1) existing control, the graph 805 shows a transition of the CO₂ flow rate in (2) single-input single-output, and the graph 806 shows a transition of the CO₂ flow rate in (3) 2-input 2-output. Graphs 804a, 805a, and 806a show target values, and graphs 804b, 805b, and 806b show control results. In (1) existing control, a time zone in which there is a slight deviation between the target value and the control value is observed, whereas in (2) single-input single-output and (3) 2-input 2-output, control can be achieved almost as intended.

FIG. 8B shows results of the manipulated variable and the CO₂ recovery rate. Vertical axes of graphs 807 to 809 represent the lean absorbent solution flow rate WL, and horizontal axes represent time. The graphs 807b to 809b show a transition of the lean absorbent solution flow rate WL by (1) existing control, a transition of the lean absorbent solution flow rate WL by (2) single-input single-output, and a transition of the lean absorbent solution flow rate WL by (3) 2-input 2-output, respectively.

Vertical axes of graphs 810 to 812 represent the heater heat input Qᵢₙ, and horizontal axes represent time. Graphs 810a, 811a, and 812a show target values of the heater heat input Qᵢₙ (target values in a case where the exhaust gas flow rate is 60%). Graphs 810b to 812b show a transition of the heater heat input Qᵢₙ by (1) existing control, a transition of the heater heat input Qᵢₙ by (2) single-input single-output, and a transition of the heater heat input Qᵢₙ by (3) 2-input 2-output, respectively. In any case, the heater heat input Qᵢₙ transitions in a state where the heater heat input Qᵢₙ is higher than the target value.

Vertical axes of graphs 813 to 815 represent the CO₂ recovery rate, and horizontal axes represent time. Graphs 813bb to 815b show a transition of the CO₂ recovery rate by (1) existing control, a transition of the CO₂ recovery rate by (2) single-input single-output, and a transition of the CO₂ recovery rate by (3) 2-input 2-output, respectively. In the case of (2) single-input single-output, transient change is the smallest.

### (Control Result in Case Where Optimum Operating Point Is Considered)

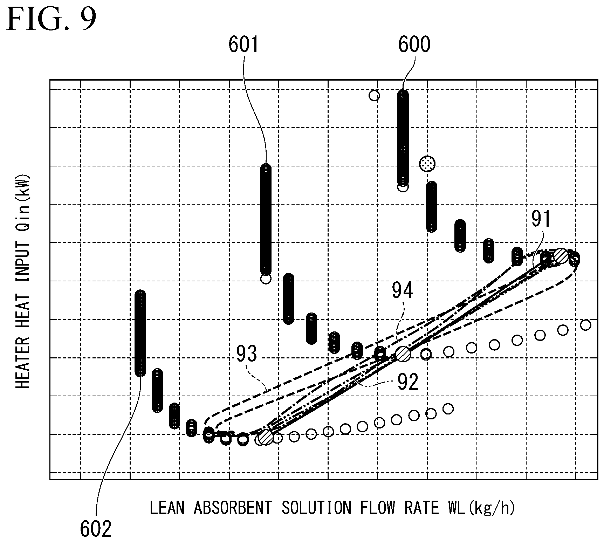

Next, an example of control in a case where an optimum operating point is considered will be described. FIG. 9 shows an example of a trajectory of an operating point in a case where the optimum operating point is considered. For (1) existing control, (2) single-input single-output, and (3) 2-input 2-output, the optimum operating point is considered by setting an operating point at the start of operation to the optimum operating point 60a. Graphs 91, 92, and 93 shown in FIG. 9 show trajectories of operating points when a change in the exhaust gas flow rate shown in FIG. 7 is applied by performing the control of (1) existing control, (2) single-input single-output, and (3) 2-input 2-output ,respectively. By viewing the trajectories in FIG. 9, it is possible to achieve an operating point close to the optimum operating point compared to the case of FIG. 6. In contrast, a graph 94 shows a trajectory of operating points when the control of (4) 2-input 2-output considering optimum operating points is performed. It can be seen that an ideal trajectory of operating points is realized compared to the graphs 91 to 93.

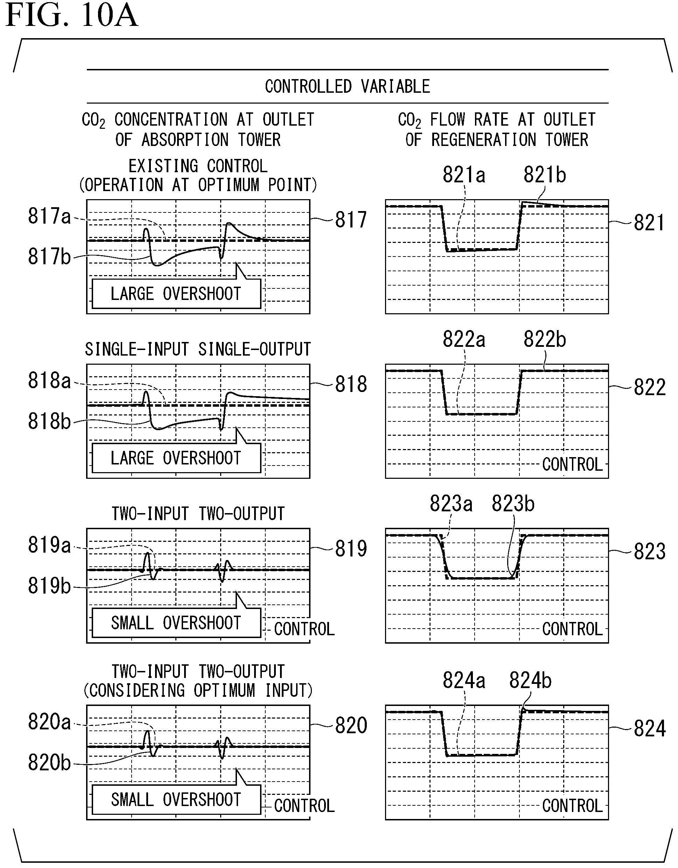

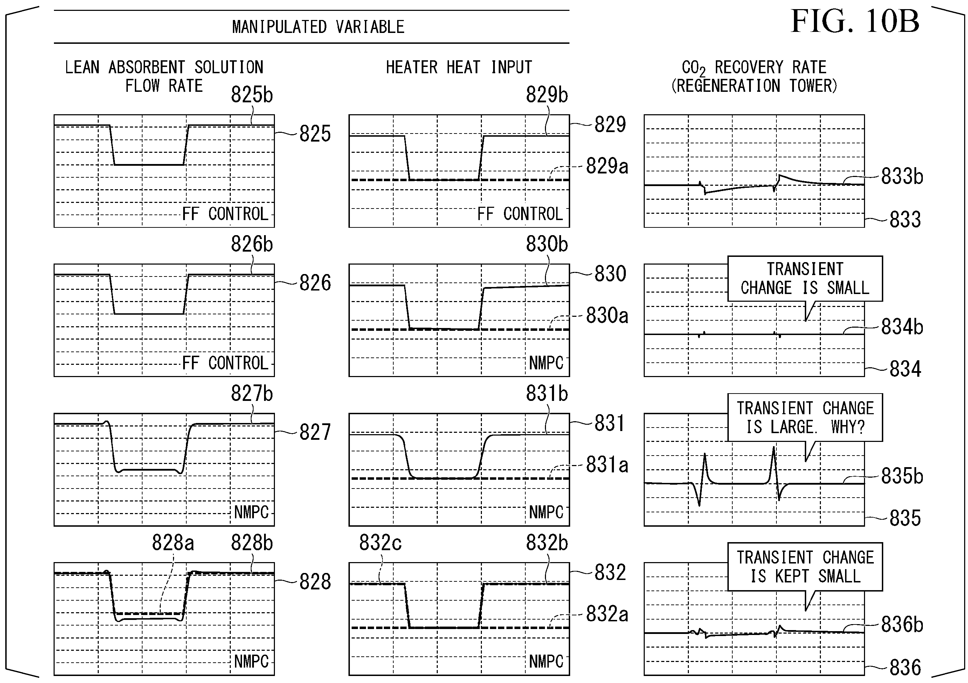

FIGS. 10A and 10B show an example of simulation results in a case where the optimum operating point is considered. FIG. 10A shows results of controlled variables. Vertical axes of graphs 817 to 820 represent the CO₂ concentration, and horizontal axes represent time. The graph 817 shows a transition of the CO₂ concentration in (1) existing control, the graph 818 shows a transition of the CO₂ concentration in (2) single-input single-output, the graph 819 shows a transition of the CO₂ concentration in (3) 2-input 2-output, and the graph 820 shows a transition of the CO₂ concentration in (4) 2-input 2-output considering optimum operating points. In the case of (4) 2-input 2-output considering optimum operating points, the target value of the CO₂ concentration can be achieved with the highest accuracy.

Vertical axes of the graphs 821 to 824 represent the CO₂ flow rate, and horizontal axes represent time. Graphs 821a to 824a show target values of the CO₂ flow rate. Graphs 821b to 824b show control results of the CO₂ flow rate in the cases of (1) existing control, (2) single-input single-output, (3) 2-input 2-output, and (4) 2-input 2-output considering optimum operating points, respectively. In any case, control can be achieved almost as intended.

FIG. 10B shows results of the manipulated variable and the CO₂ recovery rate. Vertical axes of graphs 825 to 828 represent the lean absorbent solution flow rate WL, and horizontal axes represent time. Graphs 825b to 828b show a transition of the lean absorbent solution flow rate WL by (1) existing control, a transition of the lean absorbent solution flow rate by (2) single-input single-output, a transition of the lean absorbent solution flow rate WL by (3) 2-input 2-output, and a transition of the lean absorbent solution flow rate WL by (4) 2-input 2-output considering optimum operating points, respectively. A graph 828a shows a transition of the optimum operating point.

Vertical axes of graphs 829 to 832 represent the heater heat input Qᵢₙ, and horizontal axes represent time. Graphs 829a to 832a show target values of the heater heat input Qᵢₙ (target values in a case where the exhaust gas flow rate is 60%), and a graph 832c shows a transition of the optimum operating point.

Vertical axes of the graphs 833 to 836 represent the CO₂ recovery rate, and horizontal axes represent time. Graphs 833b to 836b show a transition of the CO₂ recovery rate by (1) existing control, a transition of the CO₂ recovery rate by (2) single-input single-output, a transition of the CO₂ recovery rate by (3) 2-input 2-output, and a transition of the CO₂ recovery rate by (4) 2-input 2-output considering optimum operating points, respectively. In the case of (4) 2-input 2-output considering optimum operating points, transient change is the smallest.

Summarizing the above results, the following findings (a) to (d) are obtained. (a) By setting an initial value of the operating point in the vicinity of the optimum operating point, the heater heat input Qᵢₙ per unit CO₂ flow rate can be reduced. (b) In order to suppress the overshoot of the CO₂ concentration, the control of (3) or (4) 2-input 2-output is necessary. (c) From the viewpoint of controllability and economic efficiency, the control of (4) 2-input 2-output considering optimum operating points is optimal. (d) Even with the control of (2) and (3), controllability and economic efficiency can be improved compared to (1) existing control. By adjusting weighting coefficients (Q, R) of Equation (1) of FIG. 5, it is possible to perform control according to a plant operational purpose, such as which of economic efficiency and controllability is prioritized.

### (Operation)

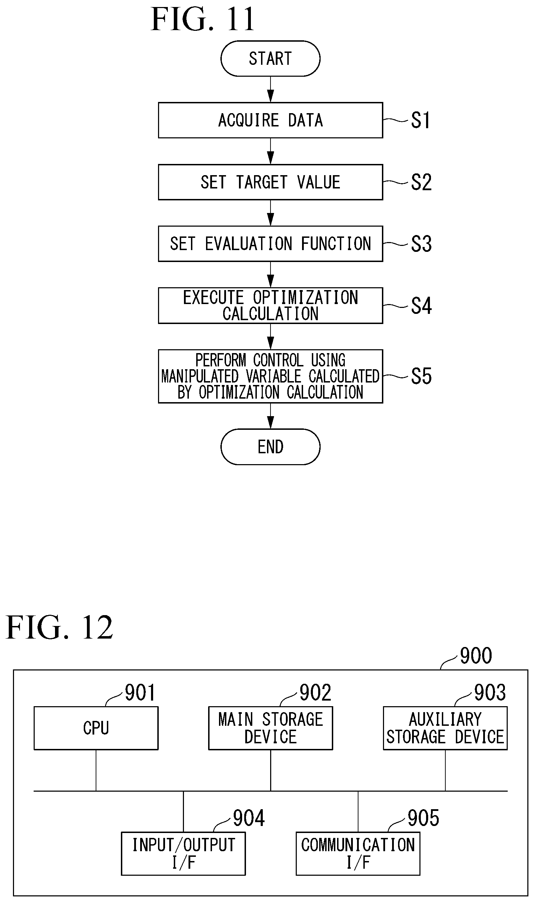

Next, the operation of the control device 10 will be described. FIG. 11 is a flowchart showing an example of control of the CO₂ recovery device according to the embodiment. It is assumed that information on which of the control methods of (2) single-input single-output, (3) 2-input 2-output, and (4) 2-input 2-output considering optimum operating points is to be adopted is input in advance to the control device 10 and set in the storage unit 14. First, the data acquisition unit 11 acquires the flow rate of the exhaust gas, the exhaust gas temperature, and the CO₂ concentration in the exhaust gas measured by the exhaust gas measuring instrument 101, the CO₂ concentration measured by the CO₂ concentration meter 102, the gas flow rate and concentration of the CO₂ gas measured by the CO₂ gas measuring instrument 103 (step S1).

Next, the target value setting unit 121 sets target values (reference values) (step S2). The target value setting unit 121 sets target values of the CO₂ concentration and/or the CO₂ recovery rate corresponding to the flow rate of the exhaust gas and the exhaust gas temperature. For example, a setting table in which the target value of the CO₂ concentration and the target value of the CO₂ recovery rate are set in association with the flow rate of the exhaust gas and the exhaust gas temperature may be registered in the storage unit 14, and the target value setting unit 121 may set the target value of the CO₂ concentration and the target value of the CO₂ recovery rate based on the setting table and the flow rate of the exhaust gas and the exhaust gas temperature acquired in step S1. In a case where the control of (4) 2-input 2-output considering optimum operating points is performed, the target value setting unit 121 sets optimum operating points corresponding to the flow rate of the exhaust gas (or the flow rate of the exhaust gas and the exhaust gas temperature). For example, in the storage unit 14, data of operating points at various flow rates of the exhaust gas illustrated in FIG. 6 is registered for each target value of the CO₂ concentration and each target value of the CO₂ recovery rate, and the target value setting unit 121 reads optimum operating points corresponding to the exhaust gas flow rate acquired in step S1 with reference to the data corresponding to the target value of the CO₂ concentration or the target value of the CO₂ recovery rate. The target value setting unit 121 sets the read optimum operating points (the lean absorbent solution flow rate WL and the heater heat input Qᵢₙ) as target values of the manipulated variables.

Next, the optimization calculation unit 123 sets an evaluation function (step S3). The optimization calculation unit 123 sets, for x, x_{ref}, and u in Equation (1) of FIG. 5, values corresponding to any of the control methods of (2) single-input single-output, (3) 2-input 2-output, and (4) 2-input 2-output considering optimum operating points and sets predetermined values for the weighting coefficients of Sf, Q, and R.

Next, the optimization calculation unit 123 executes optimization calculation (step S4). The optimization calculation unit 123 uses the prediction model 122 to calculate, by the processing as described with reference to FIG. 3, manipulated variables that enable the target value of the CO₂ recovery rate (the CO₂ flow rate discharged from the regeneration tower 3) and the target value of the CO₂ concentration to be achieved (or, in addition thereto, enable operation at the optimum operating points to be realized). In the optimization calculation, a C/GMRES method can be used. As a result, the manipulated variables that minimize the value of the evaluation function set in step S3 can be calculated in a relatively short calculation time. The manipulated variables are the lean absorbent solution flow rate WL and the heater heat input Qᵢₙ. The optimization calculation unit 123 outputs the manipulated variables calculated by the optimization calculation to the control unit 13.

Next, the control unit 13 controls an actual machine using the manipulated variables calculated by the optimization calculation (step S5). For example, the control unit 13 calculates an opening degree of the lean absorbent solution control valve 62 based on the lean absorbent solution flow rate WL calculated in step S4, and controls the lean absorbent solution control valve 62 at the calculated opening degree. For example, the control unit 13 calculates, based on the heater heat input Qᵢₙ calculated in step S4, an output of an electric heater or an opening degree of a valve provided in a pipe for supplying saturated steam to the regeneration heater 33, and controls the electric heater at the calculated output or controls the valve at the calculated opening degree.

### (Effects)

As described above, according to the nonlinear model predictive control (NMPC) of the present embodiment, it is possible to realize the operation of the CO₂ recovery device in consideration of economic efficiency while controlling the controlled variable of the CO₂ recovery device to the target value. In particular, by providing an optimum operating point as a reference and performing operation along the reference, it is possible to realize operation that achieves both controllability and economic efficiency. Since interference between the control for optimizing the CO₂ recovery rate and the control for optimizing the CO₂ concentration can be adjusted by the weight R of the controlled variable, it is not necessary to be concerned about the interference. By reducing the dimensionality of the prediction model and the optimization calculation using the C/GMRES method, for example, an update cycle can be shortened to 1 second and the prediction time can be shortened to several minutes (for example, 5 minutes), enabling real-time control of the CO₂ recovery device to be realized. As a result, for example, controllability during a transient change of the plant can be improved.

FIG. 12 is a diagram showing an example of a hardware configuration of the control device according to each embodiment. A computer 900 includes a CPU 901, a main storage device 902, an auxiliary storage device 903, an input/output interface 904, and a communication interface 905. The above-described control device 10 is implemented in the computer 900. Each of the above functions is stored in the auxiliary storage device 903 in the form of a program. The CPU 901 reads the program from the auxiliary storage device 903, loads the read program into the main storage device 902, and executes the above processes in accordance with the program. The CPU 901 secures a storage area in the main storage device 902 in accordance with the program. The CPU 901 secures a storage area for storing data being processed, in the auxiliary storage device 903 in accordance with the program.

A program for implementing all or a part of the functions of the control device 10 may be recorded on a computer-readable recording medium, and the program recorded on the recording medium may be read into a computer system and executed to perform the process by each functional unit. The term "computer system" encompasses an OS or hardware such as peripheral devices. The term "computer system" also includes a homepage providing environment (or display environment) when a WWW system is used. The term "computer-readable recording medium" refers to a portable medium such as a CD, a DVD, or a USB, or a storage device such as a hard disk built into a computer system. When the program is distributed to the computer 900 via a communication line, the computer 900 that receives the distribution may load the program into the main storage device 902 and execute the above-described process. Further, the above-described program may be a program for implementing a part of the above-described functions, and the above-described functions may be implemented in combination with a program that has already been recorded in the computer system.

In another embodiment, the control device 10 may include a custom large scale integrated circuit (LSI) such as a programmable logic device (PLD), in addition to or instead of the above-described configuration. Examples of the PLD include programmable array logic (PAL), generic array logic (GAL), a complex programmable logic device (CPLD), a field programmable gate array (FPGA), and the like. In this case, a part or all of the functions implemented by a processor may be implemented by an integrated circuit.

As described above, some embodiments according to the present disclosure have been described, but all of these embodiments are presented as examples, and are not intended to limit the scope of the invention. These embodiments can be implemented in various other forms, and various omissions, replacements, and modifications can be made without departing from the gist of the invention. These embodiments and modifications thereof are included in the scope and gist of the invention, and are also included in the invention described in the claims and the scope of equivalents thereof.

### <Supplementary Note>

The control device, the CO₂ recovery device, the control method, and the program according to each embodiment are understood as follows, for example.
(1) A control device according to a first aspect includes: a data acquisition unit that is configured to acquire operation data (such as exhaust gas flow rate) of a CO₂ recovery device; a target value setting unit that is configured to set a target value of a parameter of a controlled object based on the operation data; a prediction model that is configured to simulate an operation and a state of the CO₂ recovery device; an optimization calculation unit that is configured to calculate the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device, while predicting the predicted value of the parameter when a predetermined manipulated variable is applied to the CO2 recovery device based on a prediction model that is configured to predict a state of the CO2 recovery device; and a control unit that is configured to control the CO₂ recovery device based on the calculated manipulated variable.
   Accordingly, it is possible to implement control of the CO₂ recovery device in consideration of economic efficiency while controlling a controlled variable to a target value.
(2) A control device according to a second aspect is the control device according to (1), in which the optimization calculation is performed using a C/GMRES method.
   Accordingly, the optimization calculation can be performed at a high speed, and real-time control of the CO₂ recovery device can be realized.
(3) A control device according to a third aspect is the control device according to (1) or (2), in which the optimization calculation unit performs the optimization calculation with an objective of minimizing a deviation between the predicted value of a CO₂ flow rate discharged from the regeneration tower and the target value, and minimizing the amount of heat.
   Accordingly, it is possible to implement control of minimizing the heater heat input Qᵢₙ while bringing the CO₂ flow rate close to the target value.
(4) A control device according to a fourth aspect is the control device according to (1) or (2), in which the optimization calculation unit performs the optimization calculation with an objective of minimizing a deviation between the predicted value of a CO₂ flow rate discharged from the regeneration tower and the target value, minimizing a deviation between the predicted value of a concentration of CO₂ discharged from an absorption tower of the CO₂ recovery device and the target value, and minimizing the amount of heat.
   Accordingly, it is possible to implement control of minimizing the heater heat input Qᵢₙ while bringing the CO₂ concentration and the CO₂ recovery rate close to the target values.
(5) A control device according to a fifth aspect is the control device according to (1) or (2), in which the optimization calculation unit performs the optimization calculation with an objective of minimizing a deviation between the predicted value of a CO₂ flow rate discharged from the regeneration tower and the target value, minimizing a deviation between the predicted value of a concentration of CO₂ discharged from an absorption tower of the CO₂ recovery device and the target value, minimizing a deviation between the predicted value of a flow rate of a lean absorbent solution supplied from the regeneration tower to the absorption tower and the target value, and minimizing a deviation between the predicted value of the amount of heat and the target value.
   Accordingly, it is possible to perform control that achieves both economic efficiency and controllability.
(6) A CO₂ recovery device according to a sixth aspect includes: an absorption tower; a regeneration tower; a regeneration heater provided in the regeneration tower; a pipe for sending a lean absorbent solution from the regeneration tower to the absorption tower; a valve provided in the pipe; and the control device according to (1) to (5).
(7) A control method according to a seventh aspect includes: acquiring operation data of a CO₂ recovery device; setting a target value of a parameter of a controlled object based on the operation data; calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and controlling the CO₂ recovery device based on the calculated manipulated variable.
(8) A program according to an eighth aspect causes a computer to execute a process including: acquiring operation data of a CO₂ recovery device; setting a target value of a parameter of a controlled object based on the operation data; calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and controlling the CO₂ recovery device based on the calculated manipulated variable.

### INDUSTRIAL APPLICABILITY

According to the control device, the CO₂ recovery device, the control method, and the program, it is possible to implement control of the CO₂ recovery device in consideration of economic efficiency while controlling a controlled variable to a target value.

### REFERENCE SIGNS LIST

2 Absorption tower
3 Regeneration tower
4 Heat exchanger
10 Control device
11 Data acquisition unit
12 Manipulated variable calculation unit
121 Target value setting unit
122 Prediction model
123 Optimization calculation unit
13 Control unit
14 Storage unit
21 Pump
31 Circulation line
33 Regeneration heater
51, 52, 53, 54 Pipe
61 Rich absorbent solution control valve
62 Lean absorbent solution control valve
71, 72 Flow meter
100 CO₂ recovery device
101 Exhaust gas measuring instrument
102 CO₂ concentration meter
103 CO₂ gas measuring instrument
900 Computer
901 CPU
902 Main storage device
903 Auxiliary storage device
904 Input/output interface
905 Communication interface

## Claims

1. A control device comprising:
a data acquisition unit that is configured to acquire operation data of a CO₂ recovery device;
a target value setting unit that is configured to set a target value of a parameter of a controlled object based on the operation data;
a prediction model that is configured to predict a state of the CO2 recovery device;
an optimization calculation unit that is configured to calculate the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device, while predicting the predicted value of the parameter when a predetermined manipulated variable is applied to the CO2 recovery device based on a prediction model that is configured to predict a state of the CO2 recovery device; and
a control unit that is configured to control the CO₂ recovery device based on the calculated manipulated variable.

2. The control device according to Claim 1,
wherein the optimization calculation is performed using a C/GMRES method.

3. The control device according to Claim 1 or 2,
wherein the optimization calculation unit performs the optimization calculation with an objective of minimizing a deviation between the predicted value of a CO₂ flow rate discharged from the regeneration tower and the target value, and minimizing the amount of heat.

4. The control device according to Claim 1 or 2,
wherein the optimization calculation unit performs the optimization calculation with an objective of minimizing a deviation between the predicted value of a CO₂ flow rate discharged from the regeneration tower and the target value, minimizing a deviation between the predicted value of a concentration of CO₂ discharged from an absorption tower of the CO₂ recovery device and the target value, and minimizing the amount of heat.

5. The control device according to Claim 1 or 2,
wherein the optimization calculation unit performs the optimization calculation with an objective of minimizing a deviation between the predicted value of a CO₂ flow rate discharged from the regeneration tower and the target value, minimizing a deviation between the predicted value of a concentration of CO₂ discharged from an absorption tower of the CO₂ recovery device and the target value, minimizing a deviation between the predicted value of a flow rate of a lean absorbent solution supplied from the regeneration tower to the absorption tower and the target value, and minimizing a deviation between the predicted value of the amount of heat and the target value.

6. A CO₂ recovery device comprising:
an absorption tower;
a regeneration tower;
a regeneration heater provided in the regeneration tower;
a pipe for sending a lean absorbent solution from the regeneration tower to the absorption tower;
a valve provided in the pipe; and
the control device according to Claim 1 or 2.

7. A control method comprising:
acquiring operation data of a CO₂ recovery device;
setting a target value of a parameter of a controlled object based on the operation data;
calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and
controlling the CO₂ recovery device based on the calculated manipulated variable.

8. A program causing a computer to execute a process comprising:
acquiring operation data of a CO₂ recovery device;
setting a target value of a parameter of a controlled object based on the operation data;
calculating the manipulated variable that achieves an objective by optimization calculation in a case where the objective is to minimize a deviation between a predicted value of the parameter and the target value and to optimize a predicted value of an amount of heat to be supplied to a regeneration heater provided in a regeneration tower of the CO2 recovery device,while predicting the predicted value of the parameter when a predetermined manipulated variable is applied to the CO2 recovery device based on a prediction model that is configured to predict a state of the CO2 recovery device; and
controlling the CO₂ recovery device based on the calculated manipulated variable.
